# EUROPEAN PATENT SPECIFICATION

(11) **EP 3 706 272 B1**
(45) Date of publication and mention of the grant of the patent: **09.10.2024**
(21) Application number: 20161128.2
(22) Date of filing: 05.03.2020
(51) Int. Cl.: H02G 3/04, H02G 3/32

(54) **BRACKET FOR CABLE MANAGEMENT**
HALTERUNG FÜR KABELMANAGEMENT
SUPPORT POUR GESTION DE CÂBLES

(30) Priority: 06.03.2019 US 201962814380 P; 28.02.2020 US 202016804894
(43) Date of publication of application: 09.09.2020
(73) Proprietor: Panduit Corp., Tinley Park, Illinois 60487 (US)
(72) Inventor: ROULEAU, Rodney G, Manhattan, Illinois 60442 (US)
(74) Representative: Roberts, Gwilym Vaughan

(56) References cited:
- WO-A1-2004/036693
- US-A- 4 136 423
- US-A- 4 646 395
- US-A- 4 789 286
- US-A1- 2014 239 131
- US-A1- 2015 275 578
- US-A1- 2016 025 244
- US-A1- 2016 340 978
- US-B1- 6 471 171

## Description

### Cross-Reference to Related Applications

This application claims priority to U.S. Provisional Application No. 62/814,380, filed March 6, 2019.

### Field of the Invention

The present invention relates to a bracket for cable management, and more particularly to a bracket for cable management on a U-shaped ladder rung of a ladder rack.

### Background of the Invention

Conventional cable cleats have been typically used to secure wire or cable bundles to panels, ladder racks, or similar structural members. The cable cleats include a mounting surface and a body portion that receives the wires or cable bundles. Conventional cable cleats, however, are generally difficult and time consuming to install. Thus, it is desirable to provide a bracket that is efficiently installed thereby significantly reducing labor costs and increasing productivity.

US 4646395A1 discloses a clamp for electrical cables including a body portion of stamped metal. The body portion has two end walls extending at right angles to the base. The clamp has at least a first pair of arms spaced intermediate along one edge of the base. The arms also extend outward at essential right angles to the base such that they are parallel to the end walls. An arm and an associated end wall form a first channel. The moveable jaw sits below the arms and when tightened comes into compressive engagement with the cables in the channel.

US 4136423A1 discloses an electrical cable clamp which includes a body portion having a pair of channels, each for nesting one or more cables in abutting disposition and a moveable jaw adapted to be drawn compressively against the nested cables while accommodating obliquely for differences in clamped cross-section within the respective channels. Outwardly turned ears on the body portion enables the clamp to be coupled to a slotted bracket.

US 2015/275578 A1 discloses a cradle clamp bracket assembly. The cradle clamp bracket assembly secures cables to rungs of a ladder rack. The cradle clamp bracket assembly includes an elongated bracket having a first portion and a raised second portion. The first portion includes a slot located along the center of the first portion. The raised second portion includes a downwardly extending flange and at least one gusset to strengthen the bracket. The cradle clamp bracket assembly also includes a retainer that is received in the slot to engage the rung of the ladder rack.

US 6 471 171 B1 discloses a bracket system for attachment to a rail. The bracket system includes a first bracket having a front portion, a first side portion, a second side portion opposite the first side portion, and a top portion. Each of the first and second side portions of the first bracket have a notch for securing the first bracket to the rail. The bracket system also includes a second bracket having a front portion, a first side portion, a second side portion opposite the first side portion, and a top portion. Each of the first and second side portions of the second bracket have a notch for securing the second bracket to the rail. The first side portion of the first and second brackets each have at least one slot, and the second side portion of the first and second brackets each have a tab. The at least one slot of the first bracket is configured to receive the tab of the second bracket when the second bracket is inverted and attached to the first bracket.

US 2016/340978 A1 discloses a thermal expansion and contraction system for securing cables to a ladder rung. The thermal expansion and contraction system includes a cable grip secured to the ladder rung. The cable grip includes a protective grommet for holding cables to the ladder rung, a metal plate and wire forms to secure the protective grommet to the metal plate. The thermal expansion and contraction system also includes a cable divider secured to the ladder rung to maintaining separation of cables and a cable containment clamp secured to the ladder rung.

US 2016/025244 A1 discloses a cable management attachment fitting for a ladder-type cable tray including a rung attachment portion configured to attach to a lower flange of a rung of the ladder-type cable tray without the use of an additional fastener. A cable management attachment portion extends upward from the rung attachment portion and is configured to provide a structure to which a cable management device can be secured.

US 2014/239131 A1 discloses a bracket assembly to secure a cable bundle to a ladder rung. The bracket assembly includes a metal bracket and protective grommets. The metal bracket has a first member, side walls and second members. The first member of the metal bracket is parallel to the second members of the metal bracket. The protective grommets are secured to the metal bracket. The protective grommets have a base member, sleeves extending from the base member, a side member and a bottom member. The assembled metal bracket and protective grommets receive the ladder rung and the sleeves of the protective grommets wrap around the cable bundle positioned on the ladder rung to secure the cable bundle.

### Summary of the Invention

In a first aspect, there is provided a bracket as defined in claim 1. In a second aspect, there is provided a cable management assembly as defined in claim 9.

### Brief Description of the Drawings

FIG. 1 is a top perspective view of the bracket for cable management of the present invention.
FIG. 2 is a top view of the bracket for cable management of FIG. 1.
FIG. 3 is a right side view of the bracket for cable management of FIG. 1.
FIG. 4 is a front side view of the bracket for cable management of FIG. 1.
FIG. 5 is a left side view of the bracket for cable management of FIG. 1.
FIG. 6 is a rear side view of the bracket for cable management of FIG. 1.
FIG. 7 is a bottom view of the bracket for cable management of FIG. 1.
FIG. 8 is a top perspective view of the bracket for cable management of FIG. 1 with a U-shaped ladder rung.
FIG. 9A is a side view of the bracket for cable management of FIG. 8 with a U-shaped ladder rung positioned to be installed.
FIG. 9B is a side view of the bracket for cable management of FIG. 9B with the U-shaped ladder rung installed in the bracket.
FIG. 10 is a perspective view of the bracket for cable management of FIG. 8 with a U-shaped ladder rung installed in the bracket.
FIG. 11 is a perspective view of the bracket for cable management with the U-shaped ladder rung installed in the bracket of FIG. 10 with a plurality of cables positioned thereon.
FIG. 12 is a perspective view of the bracket for cable management with the U-shaped ladder rung installed in the bracket of FIG. 11 with the plurality of cables secured via a stainless-steel tie.
FIG. 13 is a bottom view of the bracket for cable management with the U-shaped ladder rung installed in the bracket of FIG. 12 with the plurality of cables secured by a stainless-steel tie.
FIG. 14 is a right side view of the bracket for cable management with the U-shaped ladder rung installed in the bracket of FIG. 12 with the plurality of cables secured by a stainless-steel tie.
FIG. 15 is a rear view of the bracket for cable management with the U-shaped ladder rung installed in the bracket of FIG. 12 with the plurality of cables secured by a stainless-steel tie.

### Detailed Description

The present invention is directed to a bracket that is securely attached to a U-shaped ladder rung of a ladder rack.

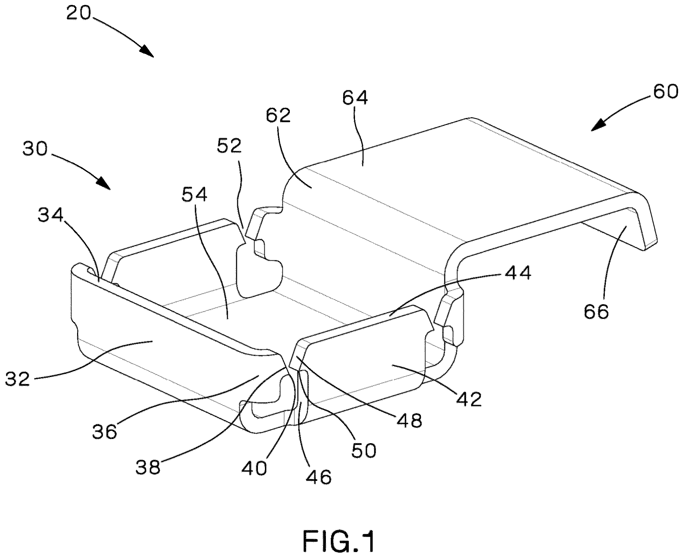

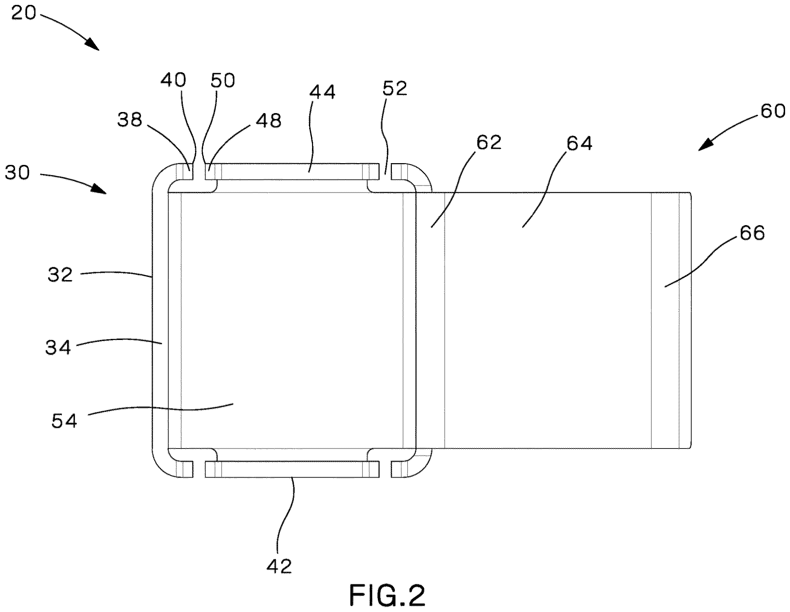

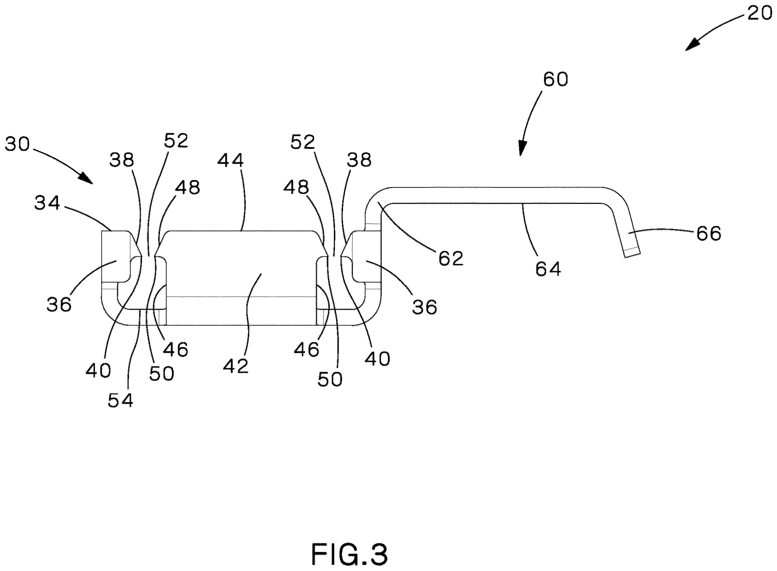

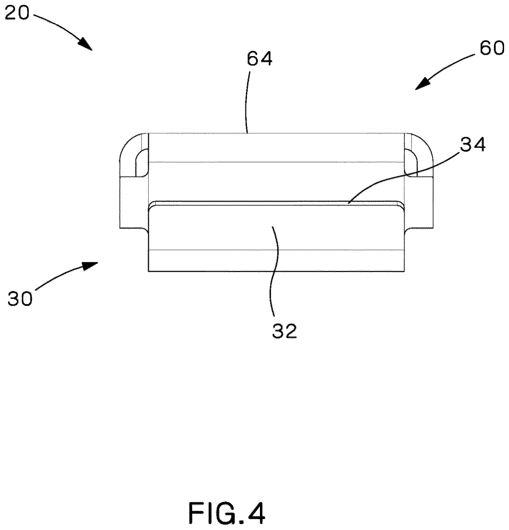

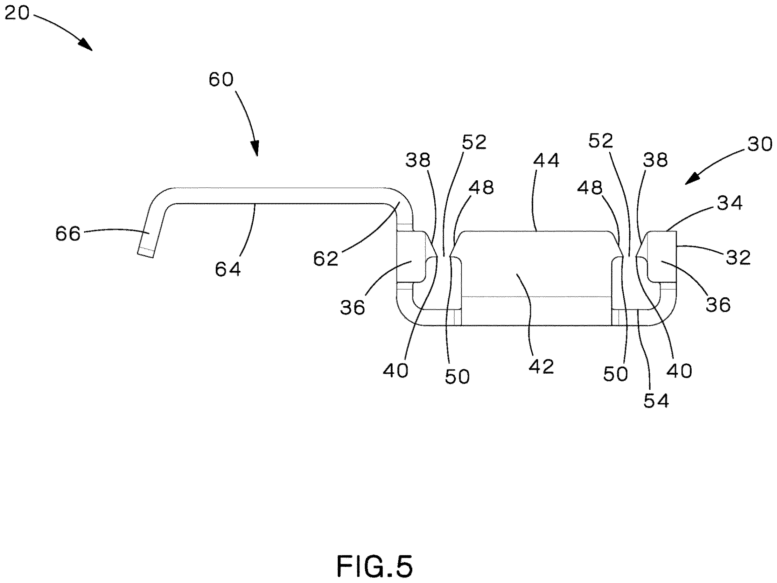

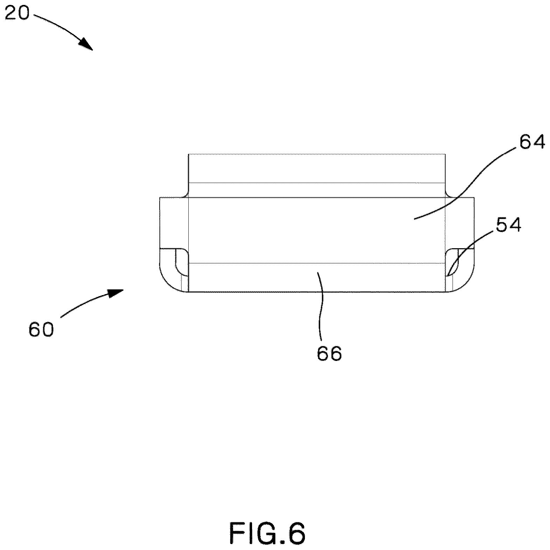

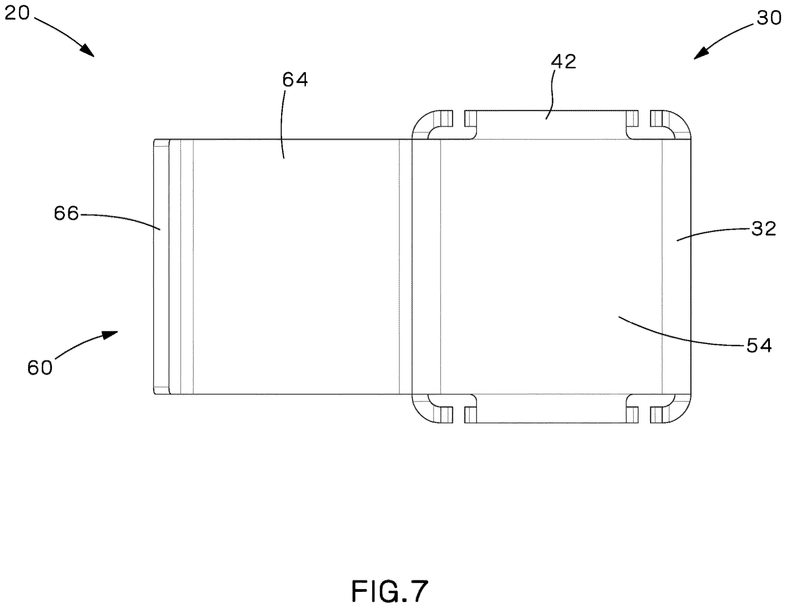

FIGS. 1-7 illustrate the bracket 20 of the present invention. The bracket 20 includes a rung insertion area 30 defined by two sidewalls 32, two gussets 42, and a bottom 54. Each sidewall 32 includes a top 34 and two curved arms 36. Each curved arm 36 includes an angled ramp 38 that leads to a pointed barb 40 that extends in a direction away from the sidewall 32.

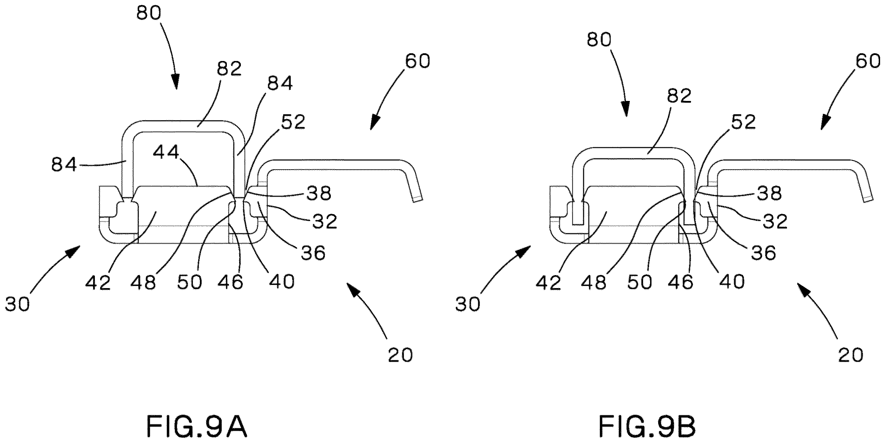

The gussets 42 include a top 44 and two sides 46. The tops 44 of the gussets 42 and the tops 34 of the sidewalls 32 are in the same plane. The gusset 42 also include angled ramps 48 that lead to a pointed barb 50 extending from each side 46. The pointed barbs 40 extending from each sidewall 32 align with one of the pointed barbs 50 extending from the gusset 42 to form narrow slots 52. The slots 52 are narrower than the thickness of the sidewalls 84 of the U-shaped rung 80 (see FIG. 9B) thereby providing an interference fit with the U-shaped ladder rung 80. Once installed, the barbs 40, 50 hold the bracket 20 in place on the U-shaped ladder rung 80.

The bracket 20 also includes an upper member 60 with a first curved end 62 that extends from the top 34 of one of the sidewalls 32, a horizontal member 64, and a downwardly extending flange 66. The horizontal member 64 provides a tie or strap locator that receives a cushion sleeve 100 and stainless-steel tie 110 or strap to secure the cables 90 positioned thereon. The edges of the upper member 60 are coined or rounded to remove any sharp edges that could damages cables 90.

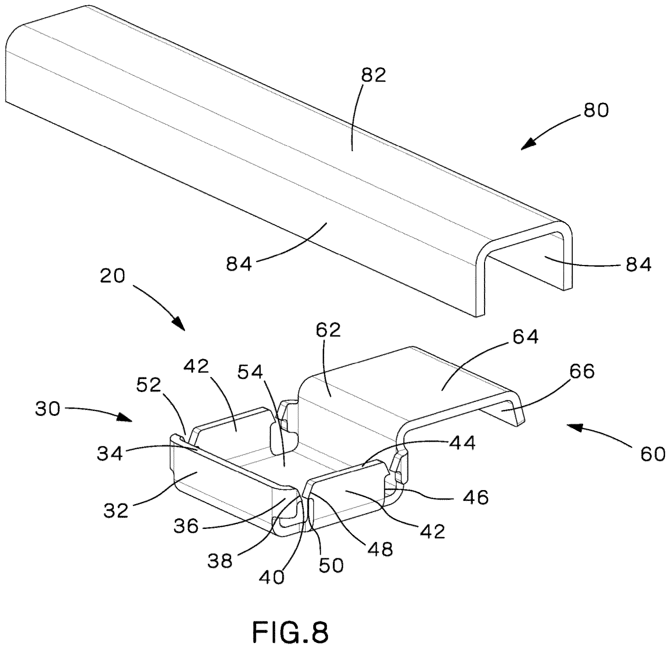

As illustrated in FIG. 8, the U-shaped ladder rung 80 includes a top member 82 and two sidewalls 84 extending from the top member 82 to form a U-shape. The U-shaped ladder rung 80 does not include slots or holes in the top member 82 or in the sidewalls 84.

As illustrated in FIGS. 9A and 9B, the bracket 20 is installed by holding the barbs 40, 50 against the sidewalls 84 of the U-shaped ladder rung 80. The bracket 20 is impacted with a hammer (not illustrated), or similar tool. The angled ramps 38, 48 above the barbs 40, 50 help locate the bracket and reduce the installation force required. As described above, the slots 52 formed by the barbs 40, 50 of the bracket 20 are narrower than the thickness of the sidewalls 84 of the U-shaped ladder rung 80 thereby providing an interference fit with the sidewalls 84 of the ladder rung 80. Once the barbs 40, 50 are separated or opened enough to slide up the sidewalls 84 of the U-shaped ladder rung 80, the hammer is used to tap the bracket 20 into a final position.

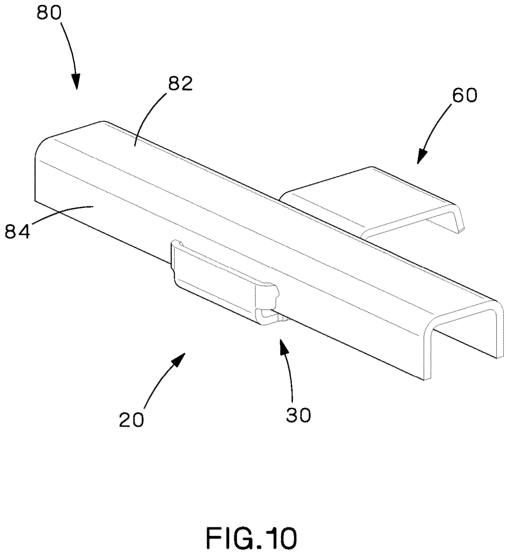

As illustrated in FIG. 10, the upper member 60 of the bracket 20 is flush with the top 82 of the U-shaped ladder rung 80. The height and the length of the bracket 20 can be selected based on different manufacturing dimensions of U-shaped ladder rungs.

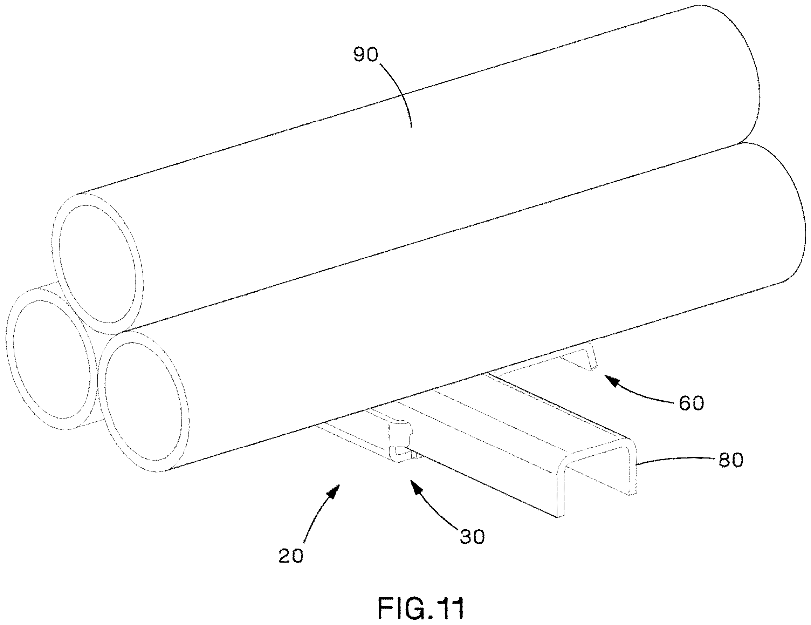

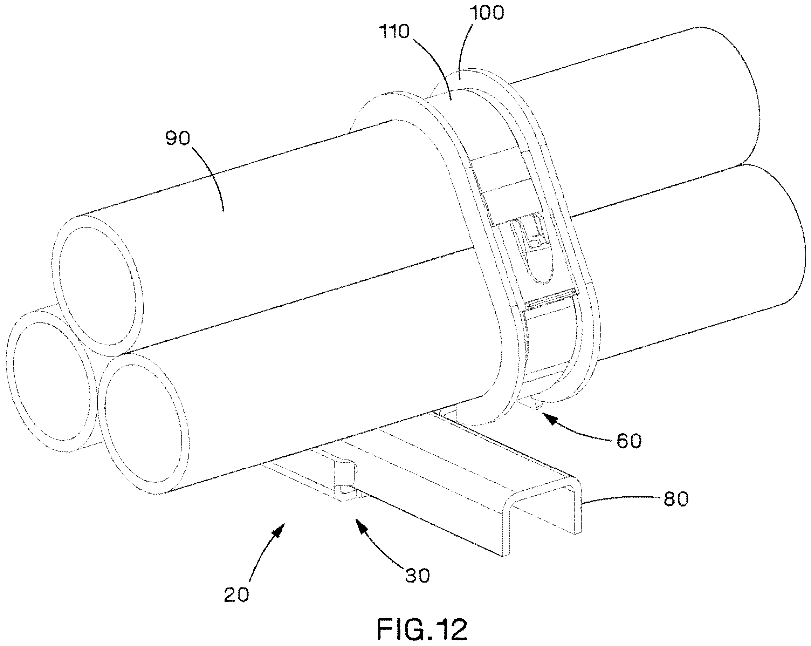

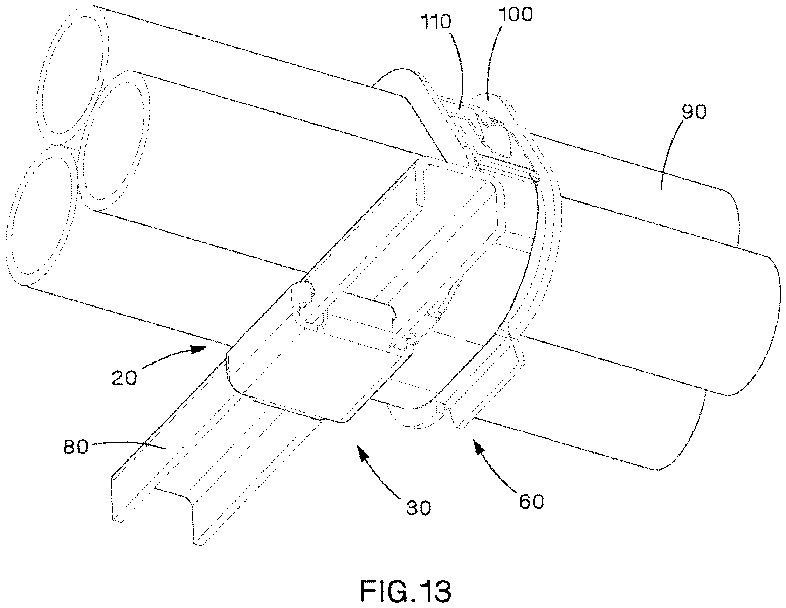

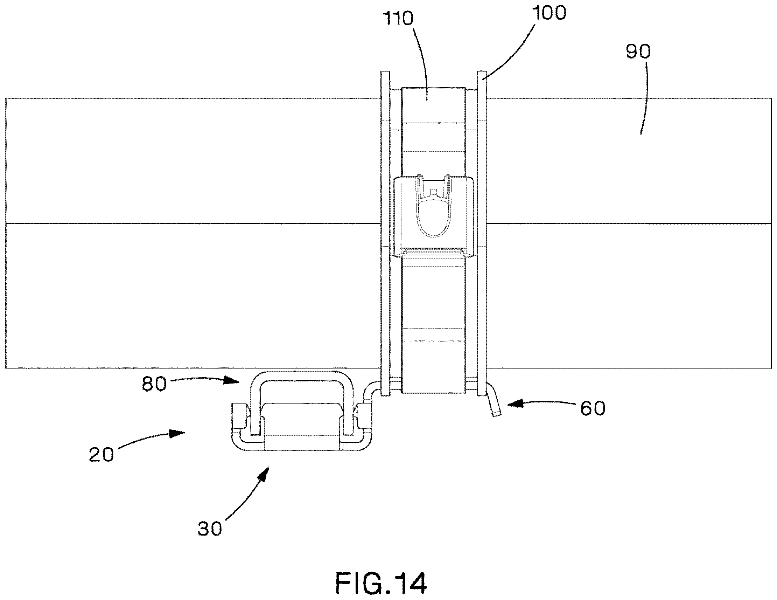

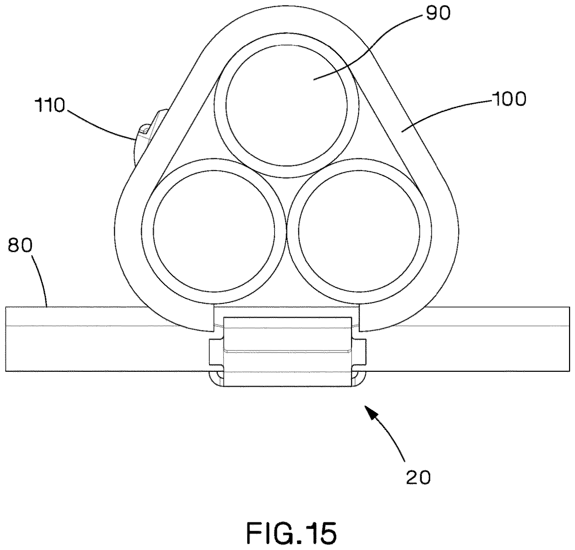

As illustrated in FIGS. 11-15, after the bracket 20 is secured to the U-shaped ladder rung 80, cables 90 can be positioned on the bracket 20 and ladder rung 80. Alternatively, since the bracket 20 is positioned below the cables 90, the bracket 20 can also be installed without moving the cables 90 already positioned on a ladder rack. The cables 90 are secured to the bracket 20 by a cushion sleeve 100 and a stainless-steel tie 110 or strapping.

The bracket 20 of the present invention is used for cable management and short circuit applications. As discussed above, the bracket 20 attaches a cable bundle 90 to a U-shaped ladder rack 80. If all three phases of AC current short out at the same time, the cables 90 repel and attract each other with forces that can be significant. The stainless-steel tie 110 or strapping holds the cable 90 together, while the bracket 20 holds the cable 90 to the ladder rung 80.

The sections of cable 90 between the stainless-steel ties 110 or strapping expand during a short circuit due to the forces exerted on the cables 90. As the cables 90 expand, they often contact the ladder rungs 80 and exert a force on the brackets 20 holding the cable bundle 90 in place. The force is mainly in the direction toward the cable bundle 90. To hold the bracket 20 in place, a force equal and opposite in direction must be applied. Typically, this equal and opposite force would be achieved with the use of a mechanical fastener. However, the bracket 20 of the present invention does not require a mechanical fastener to hold it in place to create the equal and opposite force necessary for proper performance. The bracket 20 of the present invention creates the equal and opposite force via the reinforced barbs 40, 50. The barbs 40, 50 located on the sidewalls 32 and the gusset 42 of the bracket 20 hold the bracket 20 in place when an upward force is applied to the upper member 60 of the bracket 20. The barbs 40, 50 of the sidewalls 32 and the gusset 42 exert a force on the inner surface of the U-shaped ladder rung 80 holding the bracket 20 in place. The barbs 40, 50 hold the bracket 20 in place, hands free, while the stainless-steel tie 110 or strap is being installed.

Furthermore, while the particular preferred embodiments of the present invention have been shown and described, it will be obvious to those skilled in the art that changes and modifications may be made without departing from the teaching of the invention. The matter set forth in the foregoing description and accompanying drawings is offered by way of illustration only and not as limitation. The actual scope of the invention is intended to be defined in the following claims when viewed in their proper perspective based on the prior art.

## Claims

1. A bracket (20) for securing to a U-shaped ladder rung (80), the bracket comprising:
a rung insertion area (30) defined by a bottom (54), by two sidewalls (32) extending from the bottom, and by two gussets (42) extending from the bottom and positioned between the sidewalls (32); wherein each sidewall includes a top (34) and two curved arms (36) and each gusset includes a top (44) and two sides (46); wherein slots (52) are formed between each curved arm (36) of the sidewalls (32) and each side (46) of the gusset; and
an upper member (60), extending from the top of one of the sidewalls (32),
wherein the bracket (20) is configured to receive the sidewalls (84) of the U-shaped ladder rung (80) in the slots (52), thereby securing the U-shaped ladder rung to the bracket (20) and wherein the slots (52) are narrower than the thickness of the sidewalls (84) of the U-shaped ladder rung (80), thereby providing an interference fit with the U-shaped ladder rung (80).

2. The bracket of claim 1, wherein each curved arm (36) of each sidewall includes an angled ramp (38) that leads to a pointed barb (40), wherein each pointed barb extends in a direction away from the sidewall.

3. The bracket of claim 1, wherein the gussets include angled ramps (48) that lead to a pointed barb (50) extending from each side; or wherein tops of the gussets and the tops of the sidewalls (34) are in the same plane.

4. The bracket of claim 1, wherein the slots (52) are defined by pointed barbs (40) extending from each first sidewall and pointed barbs (50) extending from each gusset (42).

5. The bracket of claim 1, wherein the upper member (60) includes a first curved end (62), a horizontal member (64), and a downwardly extending flange (66).

6. The bracket of any preceding claim, wherein edges of the upper member (60) are rounded for preventing damage to cables secured to the horizontal member (64).

7. The bracket of any preceding claim 1, wherein the horizontal member (64) provides a tie locator for receiving a tie to secure cables positioned on the horizontal member.

8. The bracket of claim 1, wherein each curved arm (36) of each sidewall includes an angled ramp (38) that leads to a pointed barb (40), and wherein each gusset (42) includes an angled ramp (48) that leads to a pointed barb (50).

9. A cable management assembly for securing cables to a U-shaped ladder rung (80) of a ladder rack; wherein the cable management assembly comprises:
the bracket (20) of any preceding claim, wherein the upper member (60) of said bracket is configured to receive cables; and
a metal tie arranged to wrap around the upper member (60) and cables positioned thereon, wherein, the bracket is arranged to receive the sidewalls (84) of the ladder rung (80) in the slots (52) of the bracket and the metal tie is arranged to secure the cables to the bracket and the ladder rung.

## Patentansprüche

1. Halterung (20) zur Befestigung an einer U-förmigen Leitersprosse (80), wobei die Halterung Folgendes umfasst:
einen Sprosseneinführbereich (30), der durch einen Boden (54), durch zwei Seitenwände (32), die sich von dem Boden erstrecken, und durch zwei Stützbleche (42) definiert wird, die sich von dem Boden erstrecken und zwischen den Seitenwänden (32) positioniert sind, wobei jede Seitenwand eine Oberseite (34) und zwei gekrümmte Arme (36) aufweist und jedes Stützblech eine Oberseite (44) und zwei Seiten (46) aufweist, wobei zwischen jedem gekrümmten Arm (36) der Seitenwände (32) und jeder Seite (46) des Stützblechs Schlitze (52) ausgebildet sind, und ein oberes Glied (60), das sich von der Oberseite einer der Seitenwände (32) erstreckt,
wobei die Halterung (20) zur Aufnahme der Seitenwände (84) der U-förmigen Leitersprosse (80) in den Schlitzen (52) ausgestaltet ist, wodurch die U-förmige Leitersprosse an der Halterung (20) befestigt wird, und wobei die Schlitze (52) schmaler als die Dicke der Seitenwände (84) der U-förmigen Leitersprosse (80) sind, wodurch eine Presspassung mit der U-förmigen Leitersprosse (80) bereitgestellt wird.

2. Halterung nach Anspruch 1, wobei jeder gekrümmte Arm (36) jeder Seitenwand eine abgewinkelte Rampe (38) aufweist, die zu einem spitzen Widerhaken (40) führt, wobei sich jeder spitze Widerhaken in eine von der Seitenwand weg gehende Richtung erstreckt.

3. Halterung nach Anspruch 1, wobei die Stützbleche abgewinkelte Rampen (48) aufweisen, die zu einem spitzen Widerhaken (50) führen, der sich von jeder Seite erstreckt, oder wobei die Oberseiten der Stützbleche und die Oberseiten der Seitenwände (34) in derselben Ebene liegen.

4. Halterung nach Anspruch 1, wobei die Schlitze (52) von spitzen Widerhaken (40) definiert werden, die sich von jeder ersten Seitenwand erstrecken, und spitzen Widerhaken (50), die sich von jedem Stützblech (42) erstrecken.

5. Halterung nach Anspruch 1, wobei das obere Glied (60) ein erstes gekrümmtes Ende (62), ein horizontales Glied (64) und einen sich nach unten erstreckenden Flansch (66) aufweist.

6. Halterung nach einem der vorhergehenden Ansprüche, wobei Ränder des oberen Glieds (60) abgerundet sind, um eine Beschädigung von Kabeln, die an dem horizontalen Glied (64) befestigt sind, zu vermeiden.

7. Halterung nach einem vorhergehenden Anspruch 1, wobei das horizontale Glied (64) eine Bügellokalisierung zur Aufnahme eines Bügels zur Befestigung von an dem horizontalen Glied positionierten Kabeln bereitstellt.

8. Halterung nach Anspruch 1, wobei jeder gekrümmte Arm (36) jeder Seitenwand eine abgewinkelte Rampe (38) aufweist, die zu einem spitzen Widerhaken (40) führt, und wobei jedes Stützblech (42) eine abgewinkelte Rampe (48) aufweist, die zu einem spitzen Widerhaken (50) führt.

9. Kabelverwaltungsanordnung zur Befestigung von Kabeln an einer U-förmigen Leitersprosse (80) eines Leitergerüsts, wobei die Kabelverwaltungsanordnung Folgendes umfasst:
die Halterung (20) nach einem der vorhergehenden Ansprüche, wobei das obere Glied (60) der Halterung zur Aufnahme von Kabeln ausgestaltet ist, und
einen Metallbügel, der so angeordnet ist, dass er sich um das obere Glied (60) und darauf positionierte Kabel schlingt, wobei die Halterung zur Aufnahme der Seitenwände (84) der Leitersprosse (80) in den Schlitzen (52) der Halterung angeordnet ist und der Metallbügel zur Befestigung der Kabel an der Halterung und der Leitersprosse angeordnet ist.

## Revendications

1. Support (20) destiné à être assujetti à un barreau d'échelle en forme de U (80), le support comprenant :
une zone d'insertion de barreau (30) définie par un fond (54), par deux parois latérales (32) s'étendant à partir du fond, et par deux goussets (42) s'étendant à partir du fond et positionnés entre les parois latérales (32);
chaque paroi latérale comportant un dessus (34) et deux bras incurvés (36) et chaque gousset comportant un dessus (44) et deux côtés (46); des fentes (52) étant formées entre chaque bras incurvé (36) des parois latérales (32) et chaque côté (46) du gousset; et
un élément supérieur (60), s'étendant à partir du dessus de l'une des parois latérales (32), le support (20) étant conçu pour recevoir les parois latérales (84) du barreau d'échelle en forme de U (80) dans les fentes (52), assujettissant ainsi le barreau d'échelle en forme de U au support (20) et les fentes (52) étant plus étroites que l'épaisseur des parois latérales (84) du barreau d'échelle en forme de U (80), fournissant ainsi un ajustement serré avec le barreau d'échelle en forme de U (80) .

2. Support selon la revendication 1, chaque bras incurvé (36) de chaque paroi latérale comportant une rampe inclinée (38) qui mène à une barbelure pointue (40), chaque barbelure pointue s'étendant dans une direction s'éloignant de la paroi latérale.

3. Support selon la revendication 1, les goussets comportant des rampes inclinées (48) qui mènent à une barbelure pointue (50) s'étendant à partir de chaque côté ; ou les dessus des goussets et les dessus des parois latérales (34) étant dans le même plan.

4. Support selon la revendication 1, les fentes (52) étant définies par des barbelures pointues (40) s'étendant à partir de chaque première paroi latérale et des barbelures pointues (50) s'étendant à partir de chaque gousset (42).

5. Support selon la revendication 1, l'élément supérieur (60) comportant une première extrémité incurvée (62), un élément horizontal (64), et un rebord s'étendant vers le bas (66).

6. Support selon l'une quelconque des revendications précédentes, les bords de l'élément supérieur (60) étant arrondis pour empêcher un endommagement des câbles assujettis à l'élément horizontal (64).

7. Support selon l'une quelconque de la revendication 1 précédente, l'élément horizontal (64) fournissant un positionneur d'attache pour recevoir une attache destinée à assujettir les câbles positionnés sur l'élément horizontal.

8. Support selon la revendication 1, chaque bras incurvé (36) de chaque paroi latérale comportant une rampe inclinée (38) qui mène à une barbelure pointue (40), et chaque gousset (42) comportant une rampe inclinée (48) qui mène à une barbelure pointue (50).

9. Ensemble d'organisation de câbles pour assujettir des câbles à un barreau d'échelle en forme de U (80) d'une étagère de type échelle ; l'ensemble d'organisation de câbles comprenant :
le support (20) selon l'une quelconque des revendications précédentes, l'élément supérieur (60) dudit support étant conçu pour recevoir des câbles ; et
une attache métallique agencée pour s'enrouler autour de l'élément supérieur (60) et des câbles positionnés dessus, le support étant agencé pour recevoir les parois latérales (84) du barreau d'échelle (80) dans les fentes (52) du support et l'attache métallique étant agencée pour assujettir les câbles au support et au barreau d'échelle.
